# EUROPEAN PATENT APPLICATION

(11) **EP 3 336 747 A1**
(43) Date of publication of application: **20.06.2018**
(21) Application number: 16465559.9
(22) Date of filing: 13.12.2016
(51) Int. Cl.: G06K 9/00, G06K 9/46

(54) **RAIN DETECTION WITH A CAMERA**

(71) Applicant: Continental Automotive GmbH, 30165 Hannover (DE)
(72) Inventor: Regep, Cezar, 307160 Dumbravita (RO)
(74) Representative: Reuter, Andreas

(57) **Abstract**

The present invention relates to a method and a device for detecting rain (4) in images recorded by a camera (1) looking through a pane (2). The method comprises the steps:
a) providing a series of image frames as input information, the image frames relating to a scene recorded by the camera (1) through the pane (2);
b) detecting sharp edges in a first image frame (S22);
c) tracking the detected edges in subsequent image frames (S24);
d) evaluating the sharpness of the tracked edges over time (S26) ; and
e) providing an output signal representing changes of sharpness in the tracked edges.

## Description

The present invention relates to a method and a device for the determination of the quality of an image acquired by a camera, especially the determination of a low image quality caused by heavy rain. In particular the invention can be used in a vehicle.

Rain detection by means of image processing of images taken by a camera which is focused on a windshield is known. Such rain detection can be realized by looking for droplets on the windshield. A disadvantage of such rain detection is that the camera needs to be focused on the windshield, whereas cameras used as sensor for advanced driver assistance systems in vehicles are used to monitor the surroundings of the vehicle and are therefore focused to infinity or almost to infinity.

WO 2006/024247 A1 discloses a method for detecting precipitation, especially rain and fog, on a windscreen, which is not based on an active illumination of the windscreen or a measurement of the reflectivity, but on a camera using a plurality of adjacent pixels for detecting an image of a target area. Said target area is located in the surroundings of the vehicle, and the windscreen is thus represented in a blurred manner. In the event of a blurred representation, raindrops or fog on the windscreen produce a soft-focus effect in the image. The sharpness of the image and/or the difference in contrast of adjacent pixels is evaluated and the presence of precipitation is detected therefrom, the image is then preferably subjected to a two-dimensional Fourier transformation and the spatial frequencies are evaluated. A first image is recorded especially for a low contrast target area, a windscreen wiper passing over the windscreen in the visual region of the camera or a heating process is activated, and a second image is then recorded, and both images are evaluated according to changes.

US 7860275 B2 discloses a method for detecting raindrops on a windscreen, which uses a camera, which is fitted inside the vehicle opposite the windscreen and which is focused at infinite. The method comprises steps of acquiring images by a camera through the windscreen, camera preferably focused at infinite, retrieving the contours of the spots present on the acquired images, and realizing the histogram of the widths of contours of the spots. It has been proven that a spot corresponding to a droplet of water on the windscreen could be distinguished from other spots (corresponding for example to an object of the landscape outside the vehicle) due to its width of contour, which may be quantified by a certain number of pixels. The droplets of water on a windscreen indeed present a contour, which is relatively wider than other spots. Establishing a histogram of these widths of contour makes it possible to select the contour points corresponding to the droplets, then eventually "to reconstruct" these droplets in the images by processing, in order to characterize them finally.

DE 102011055343 A1 discloses a method for the detection of rain from an image of a camera that is partially focused on the windscreen of a vehicle. The method involves detecting an edge in an evaluation area of the camera image, and determining a measurement of the increase of the edge. The edge with a steep rise is classified as part of the potential raindrop on the disk imaged in the evaluation area. The span width and standard deviation of intensity values (X-1 to X-9) inside a window are evaluated with adjacent pixels for determination of the increase of edge at a pixel position (p-11 to p-45), where the pixel position lies in the center of the window.

Tong, H., Li, M., Zhang, H., & Zhang, C. (Tong et al.) propose a method for "Blur detection for digital images using wavelet transform" in their paper of the same title presented at Multimedia and Expo, 2004, ICME'04, 2004 IEEE International Conference on (Vol. 1, pp. 17-20), IEEE.

Nashashibi et al. present in their publication "Detection of Unfocused Raindrops on a Windscreen using Low Level Image Processing". International Conference on Control, Automation, Robotics and Vision: ICARV'2010, Dec 2010, Singapore, pp. 1410-1415, a method where the camera is focused at infinity and rain is detected via image processing. The detection of rain in this publication is based on local intensity of the pixels and number of edges change when there is a drop on the windshield. Several disadvantages of this method are mentioned in the subchapter B. (Discussion) of the chapter V. (Experimental Results) of the publication.

US 7646889 B2 shows a rain sensor in a vehicle including a camera focused to infinity and a processor. The processor detects rain based on a variation degree of the intensity of pixels in the image from an average intensity of the pixels. Rain drops attached on the windscreen cause blur in a region of the image corresponding to the rain drops. Blur in an image increases a variation (deviation or variance) among intensities of pixels in this region. To detect a moment-to-moment transition of the variance, the image is divided into a number of sub-areas.

The problem to be solved by the present invention is to provide an improved method and device to determine the quantity and type of rain on a window pane of a vehicle from images recorded with a camera through said window pane.

A starting point of the present invention is to detect rain by detecting and tracking sharp edges across consecutive image frames. When a droplet hits the windshield the edges change from sharp edges to blurred edges. Depending on e.g. the number of edges affected in different areas of the image it can be said how strong is the rain.

The camera is disposed behind a pane, in particular in the interior of a vehicle e.g. behind a windscreen, and is focused onto a far range that lies in front of the pane. The camera preferably comprises an objective for focusing and an image sensor, e.g. a CCD or CMOS sensor.

The invention provides a reliable method to determine the quantity and type of rain on a window pane with a camera, in particular with a driver assistance camera inside a pane of a vehicle.

According to a first aspect, there is provided a method for detecting rain in images of a camera looking through a pane, comprising:
a) providing a series of image frames as input information, the image frames relating to a scene viewed by a camera through a pane;
b) detecting sharp edges in a first image frame;
c) tracking the detected edges in subsequent image frames;
d) evaluating the sharpness of the tracked edges over time; and
e) providing an output signal representing changes of sharpness in the tracked edges.
The output signal is a useful measure for the amount and type of rain detected. Tracked edges that were initially sharp edges becoming blurred over time are in most cases linked to rain or other particles appearing on the window pane.

According to a particular aspect in step d) a value is calculated for an edge, the value being a measure of the sharpness of this edge. This valued (the measure of sharpness) can be calculated from edges found in the image in different ways.

DE 102011055343 A1 shows that the steepness of edges can evaluated in order to detect focused objects represented by sharp edges with a steep intensity gradient while for other objects the less focused they are the smoother the intensity gradient of their edges in the image becomes. By applying the proposed evaluation methods, a measure of sharpness can be defined, as blurred edges correspond to smoothed intensity gradients. Other methods to calculate a sharpness of an edge can be used as well and as will be described herein in more detail.

According to another particular aspect in step d) a threshold value is used to detect blurred edges accounting for rain on the pane. A blurred edge is determined by having a sharpness (value) being less than a certain threshold value.
This threshold value can be determined from a set of curves of sharpness values recorded in different realistic scenarios (e.g. with heavy rain, with light rain, without rain, at daytime, at nighttime).

According to another particular aspect edges are found using HAAR transform.

According to another particular aspect edges are classified as Dirac, Roof, Astep or Gstep types, as presented by Tong et al. The measure of blur (opposite of sharpness) proposed by Tong et al. takes into account the classified edges and is called "BlurExtent" or blur confident coefficient. Details of this approach will be discussed later in this description.

According to a second aspect, there is provided a device for detecting rain in images recorded by a camera looking through a pane, comprising an input unit, a processing unit and an output unit.

The input unit is configured to provide the processing unit with a series of images recorded by a camera looking through a pane. The processing unit is configured to detect sharp edges in a first image frame, track the detected edges in subsequent image frames and evaluate the sharpness of the tracked edges over time. The output unit is configured to provide an output signal representing changes of sharpness in the tracked edges.

According to a particular aspect the device is further comprising a camera configured to record the series of images and transmit the recorded images to the input unit.

According to another particular aspect the camera is not focused on the pane (e.g. the windscreen) of the vehicle. In other words, the camera may be focused to infinity or close to infinity.

According to a further aspect the invention relates to a vehicle comprising the device. In this case, the camera is a vehicle camera viewing a scene external to the vehicle through a pane of the vehicle.
In this case, lane markings on the road surface, other vehicles or other static or moving objects on the road or near the road may serve as objects providing sharp edges in the image recorded by the camera.

It has to be noted that embodiments of the present invention are described with reference to different subject-matters. In particular, some embodiments are described with reference to method type claims, whereas other embodiments are described with reference to the device type claims.

However, a person skilled in the art will gather from the above and the foregoing description that, unless otherwise notified, in addition to any combination of features belonging to one type of the subject-matter also any combination between features relating to different subject-matters is considered to be disclosed with this application.

However, all features can be combined providing synergetic effects that are more than the simple summation of these features.

While the invention has been illustrated and described in detail in the drawings and foregoing description, such illustration and description are to be considered illustrative or exemplary and not restrictive; the present invention is not limited to the disclosed embodiments.

Other variations to the disclosed embodiments can be understood and effected by those skilled in the art and practicing the claimed invention, from a study of the drawings, the disclosure, and the appended claims.

In the claims, the word "comprising" does not exclude other elements or steps, and the indefinite article "a" or "an" does not exclude a plurality. A single processor or controller or other unit may fulfill the functions of several items recited in the claims.

The mere fact that certain measures are recited in mutually different dependent claims does not indicate that a combination of these measures cannot be used to advantage.

A computer program performing the method of the present invention may be stored on a computer-readable medium. A computer-readable medium may be a floppy disk, a hard disk, a CD, a DVD, an USB (Universal Serial Bus) storage device, a RAM (Random Access Memory), a ROM (Read Only Memory) or an EPROM (Erasable Programmable Read Only Memory).

A computer-readable medium may also be a data communication network, for example the Internet, which allows downloading a program code.

The methods, systems, and devices described herein may be implemented as software in a Digital Signal Processor, DSP, in a micro-controller or in any other side-processor or as a hardware circuit within an application specific integrated circuit, ASIC, complex programmable logic device, CPLD or field programmable gate array, FPGA.

The present invention can be implemented in digital electronic circuitry or in computer hardware, firmware, software, or in combinations thereof, for instance in available hardware of conventional medical imaging devices or in new hardware dedicated for processing the methods described herein.

Exemplary embodiments will be described in the following with reference to the following drawings:
Fig. 1 shows a a camera mounted in a vehicle looking through the windscreen;
Fig. 2 shows a schematic setup of an embodiment of a rain detection device;
Fig. 3 shows a first image frame containing several sharp edges;
Fig. 4 shows a first consecutive image frame containing the several sharp edges;
Fig. 5 shows a second consecutive image frame containing one blurred and other sharp edges; and
Fig. 6 shows examples of edge-types that can be used in order to determine the sharpness of edges.

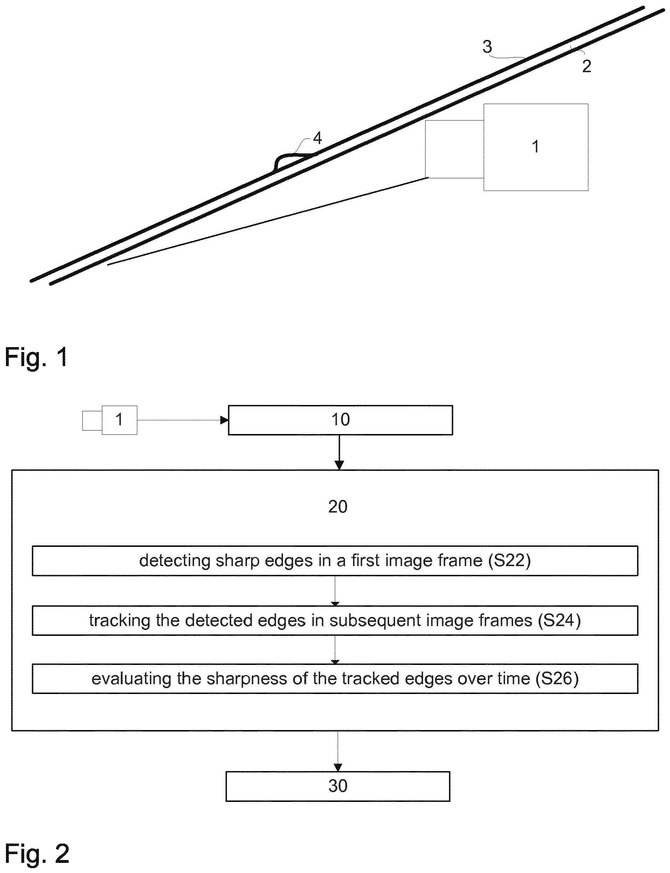

Fig. 1 shows a camera (1) mounted in a vehicle looking through a pane (2) of the vehicle, e.g. the windscreen (2) . A drop of rain is present on the surface (3) of the pane (2). The camera (1) is not focused on the pane (2) but focused to infinity in order to image the surroundings of the vehicle.
The drop of rain (4) itself will therefore not be imaged by the camera (1). Water in the form of raindrops (4) or a water film on the windshield will blur the image acquired by the camera. After a wiper of the vehicle swept over the windscreen the blur will be reduced significantly and objects will be imaged with sharp edges by the camera.

Fig. 2 shows a diagram of an embodiment of a rain detection device. A series of images recorded with a camera (1) are retrieved from an input unit (10) and provided to a processing unit (20.
The processing unit (20) is configured to detect sharp edges in a first image frame (S22),
track the detected edges in subsequent image frames (S24) and evaluate the sharpness of the tracked edges over time (S26). An output unit (30) is configured to provide an output signal representing changes of sharpness in the tracked edges obtained from evaluation performed by the processing unit (20).

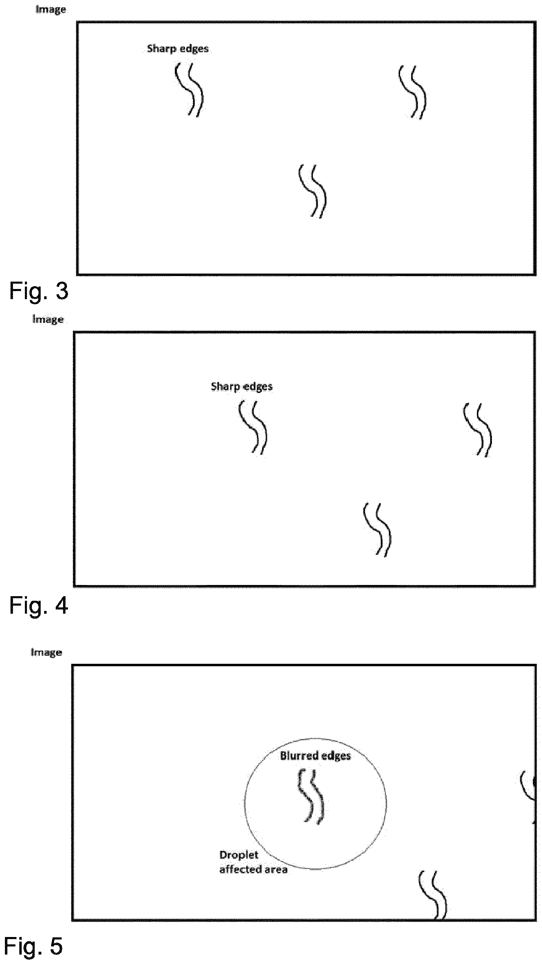

Fig. 3 shows a schematic representation of a first image frame containing several sharp edges.
Water in the form of raindrops or a water film on the windshield will blur the image acquired by the camera. However, even in a rainy environment, after a wiper of the vehicle swept over the windscreen and cleaned the windscreen from raindrops, edges of objects present in the field of view of the camera will be imaged with sharp edges.

Fig. 4 shows a schematic representation of a second image frame containing several sharp edges. The second image frame was recorded as a next or successive frame after the first image frame was recorded. The edges can be assigned to the same objects that accounted for the sharp edges in Fig. 3. However, since the vehicle (or the objects) has (have) moved between recording the first and the second image frame with the camera fixed in the vehicle, the edges have shifted their position and changed their size in the second image frame compared to the corresponding edges in the first image frame.

Fig. 5 shows a schematic representation of a third (successively) image frame. One pair of edges appears as blurred edges. As the corresponding pair of edges in the first and the second frame were recorded as sharp edges, a transition (from sharp to blurred) can be detected in tracking this pair of edges in the series of image frames.

A certain threshold blur value can be used to discriminate a transition between a sharp edge and a blurred edge. The effect of an accumulation of water on the glass pane will produce blur in the edges of objects seen by the camera through drops or a film of water on the pane. Edges that are recorded within the circular area denoted as "droplet affected area" in Fig. 5 will no longer be imaged with sharp edges but blurred edges because the water droplet on the windscreen blurs objects in this area of the field of view of the camera.

In an example, detection of blur comprises utilisation of a Haar wavelet transform. In an example, the Haar wavelet transform is utilised to detect blur in an area-of-interest within an image. In an example, detection of a blurred AOI comprises a determination of a measure of local gradients and/or a measure of the sharpness of features in the AOI. In an example, detection of a blurred AOI comprises utilisation of an edge detection algorithm. In an example, detection of a blurred AOI comprises utilisation of a point spread function applied over different spatial areas of the image. In an example, detection of a blurred AOI comprises utilisation of a Fourier transform or Fast Fourier transform applied over the AOI. In an example, detection of a blurred region comprises utilisation of a Gaussian Laplace filter over the AOI. In other words, as the image has been acquired by a camera that is not focussed on the windscreen but is configured to view the scene outside of the vehicle, the outside scene will be characterised by features that are in the absence of rain on the pane in focus and as such have sharp edges, strong gradients etc. However, a region of the image where there is rain on the pane will suffer to a certain extent "blur" or be out of focus as the rain (additional optical element) changes the focus of the camera. An AOI of a wetted pane will be characterised by edges that are not as sharp as the AOI of a dry pane and gradients that are not as strong as the AOI of an image recorded with a dry pane. The processing unit then uses image processing algorithms to analyse the AOI, at an appropriate spatial scale, to determine if that the AOI is blurred or not. This determination can be called 'self contained', in that the determination can be made on the basis of the analysis of the AOI.

### Image Analysis

A good way to indicate the blurriness degree is represented by the edges present in the image. Indeed, cases in which no edges may occur (examples include a dark night and / or a cloudless blue summer sky) are possible, but unlikely in a series of images recorded, especially from a camera of a driving vehicle. Several types of edges are of interest in order to analyze an image's blurriness. These edges are:
a) the Dirac,
b) the Roof,
c) the Astep,
d) the Gstep

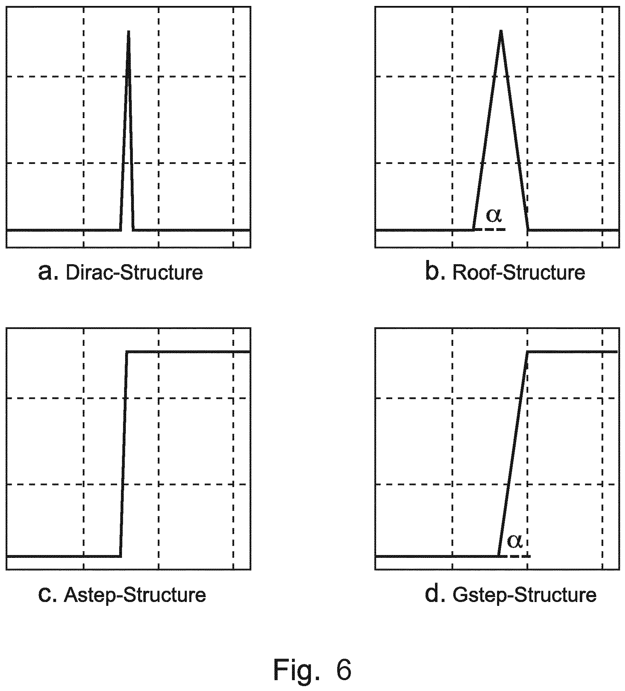

These types of edges can be seen in Fig. 6.

The structures shown represent different types of intensity changes.
In case of an abrupt edge, high frequencies are involved. Therefore, an ideal image with a dry pane will have edges of types Dirac and Astep. In case of limited frequencies due to rain on the pane, they become of types b) and d) - blurry. As such an image edge analysis is used to reveal information regarding the blurriness in the area of interest within an image. Specifically, a Haar algorithm is used to establish the blurriness of the image. Performing a Haar wavelet transform will result in a hierarchical pyramid like structure. The decomposition level in this case is 3. The AOI is then divided in NxN windows/tiles, each being a power of 2 (in fact this is the reason why the block's dimensions are 16x16). A block (which is often referred to as a tile) is considered if there is a change (an edge) in horizontal, vertical or diagonal directions. However, for each of them there is a threshold. For a specific block, if the change exceeds the threshold, the said block is considered to be an edge point. Changes exceeding a threshold are considered in all directions in order to compute one value for each image (the original one plus two pyramidal images). Several rules apply once these values are found. For every block labeled an edge point, if the computed value in the original image exceeds the value computed in the level 1 image and the level 1 image exceeds the level 2 image computed value, the block is a Dirac or Astep structure, otherwise it is a GStep or Roof edge. If the first level value is greater than the other two, the block is a Roof edge.

While Dirac and Astep edges are characteristic for un-blurred images, Roof and Gstep edges can be considered to define a measure for blur in an image. For Roof and Gstep structures, there is a parameter α (0 < α < π/2) indicating the sharpness of the edge: the larger is α the sharper the edge is.
Depending on a threshold, it can be determined whether a Roof- or Gstep-structure more likely to be in a blurred image. The percentage of Roof- and Gstep-structures which are more likely to be in a blurred image can be used as a measure of blur (blur extent).
Further details on the Haar wavelet transform can be found in the following paper (see chapter 2. Blur detection scheme) : Tong, H., Li, M., Zhang, H., & Zhang, C. (2004, June), "Blur detection for digital images using wavelet transform", Multimedia and Expo, 2004, ICME'04, 2004 IEEE International Conference on (Vol. 1, pp. 17-20), IEEE.

In another exemplary embodiment, a computer program or computer program element is provided that is characterized by being configured to execute the method steps of the method according to one of the preceding embodiments, on an appropriate system. The computer program element might therefore be stored on a computer unit, which might also be part of an embodiment. This computing unit may be configured to perform or induce performing of the steps of the method described above. Moreover, it may be configured to operate the components of the above described apparatus and/or system. The computing unit can be configured to operate automatically and/or to execute the orders of a user. A computer program may be loaded into a working memory of a data processor. The data processor may thus be equipped to carry out the method according to one of the preceding embodiments. According to a further exemplary embodiment of the present invention, a computer readable medium, such as a CD-ROM, is presented wherein the computer readable medium has a computer program element stored on it which computer program element is described by the preceding section.
It has to be noted that embodiments of the invention are described with reference to different subject matters. In particular, some embodiments are described with reference to method type claims whereas other embodiments are described with reference to the device type claims. However, a person skilled in the art will gather from the above and the following description that, unless otherwise notified, in addition to any combination of features belonging to one type of subject matter also any combination between features relating to different subject matters is considered to be disclosed with this application. However, all features can be combined providing synergetic effects that are more than the simple summation of the features.
While the invention has been illustrated and described in detail in the drawings and foregoing description, such illustration and description are to be considered illustrative or exemplary and not restrictive. The invention is not limited to the disclosed embodiments. Other variations to the disclosed embodiments can be understood and effected by those skilled in the art in practicing a claimed invention, from a study of the drawings, the disclosure, and the dependent claims.
In the claims, the word "comprising" does not exclude other elements or steps, and the indefinite article "a" or "an" does not exclude a plurality. A single processor or other unit may fulfill the functions of several items re-cited in the claims. The mere fact that certain measures are re-cited in mutually different dependent claims does not indicate that a combination of these measures cannot be used to advantage. Any reference signs in the claims should not be construed as limiting the scope.

## Claims

1. A method for detecting rain (4) in images recorded by a camera (1) looking through a pane (2), comprising the steps:
a) providing a series of image frames as input information, the image frames relating to a scene recorded by the camera (1) through the pane (2);
b) detecting sharp edges in a first image frame (S22);
c) tracking the detected edges in subsequent image frames (S24);
d) evaluating the sharpness of the tracked edges over time (S26); and
e) providing an output signal representing changes of sharpness in the tracked edges.

2. A method according to claim 1, wherein in step d) evaluating comprises calculating a value for an edge, the value being a measure of the sharpness of this edge.

3. A method according to any of the preceding claims wherein in step d) evaluating comprises using threshold value to detect blurred edges accounting for rain on the pane (2).

4. A method according to any of the preceding claims wherein the output signal corresponds to how strong the rain is depending on the number of edges for which the evaluation shows a decrease in sharpness in the course of the image series.

5. A method according to any of the preceding claims wherein edges are detected in step b) comprises using HAAR transform.

6. A method according to claim 5 wherein edges are classified as Dirac, Roof, Astep or Gstep types and the calculation of the sharpness value takes into account Roof, Astep and Gstep type edges.

7. A device for detecting rain (4) in images of a camera (1) looking through a pane (2), comprising:
- an input unit (10);
- a processing unit (20); and
- an output unit (30);
wherein, the input unit (10) is configured to provide the processing unit (20) with a series of images recorded by the camera (1);
wherein, the processing unit (20) is configured to
detect sharp edges in a first image frame,
track the detected edges in subsequent image frames,
evaluate the sharpness of the tracked edges over time; and
wherein, the output unit (30) is configured to provide an output signal representing changes of sharpness in the tracked edges.

8. The device according to claim 7, further comprising the camera (1) looking through the pane (2) configured to record the series of images and transmit the recorded images to the input unit.

9. The device according to claim 8, wherein the camera (1) is not focused on the pane (2).

10. The device according to claim 8 or 9 wherein the camera is a vehicle camera viewing a scene external to a vehicle through a pane (2) of the vehicle.
